# EUROPÄISCHE PATENTANMELDUNG

(11) **EP 1 862 758 A2**
(43) Veröffentlichungstag der Anmeldung: **05.12.2007**
(21) Anmeldenummer: 07010553.1
(22) Anmeldetag: 26.05.2007
(51) Int. Cl.: F42B 12/46

(54) **Flugkörper für den Überschallbereich**

(30) Priorität: 31.05.2006 DE 102006025270
(71) Anmelder: Deutsches Zentrum für Luft- und Raumfahrt e.V., 51147 Köln (DE)
(72) Erfinder: Schülein, Erich, 37127 Scheden (DE)
(74) Vertreter: Rehberg Hüppe + Partner

(57) **Zusammenfassung**

Die Erfindung betrifft einen Flugkörper (1) mit einem Aero-Spike (4).

Erfindungsgemäß besitzt der Aero-Spike (4) radial nach außen orientierte Strömungskanäle, über die Luft radial in eine Austrittsrichtung (14) "ausgeblasen" werden kann, wodurch verhindert werden soll, dass sich die Strömung an eine Mantelfläche (13) des Aero-Spikes anlegt. Vorzugsweise sind derartige Strömungskanäle (15) dadurch gebildet, dass der Aero-Spike (4) mit einem porösen Material gebildet ist.

## Beschreibung

### TECHNISCHES GEBIET DER ERFINDUNG

Die Erfindung betrifft einen Flugkörper für den Überschallbereich mit einem sich von einer vorderen Stirnfläche des Flugkörpers erstreckenden Aero-Spike.

### STAND DER TECHNIK

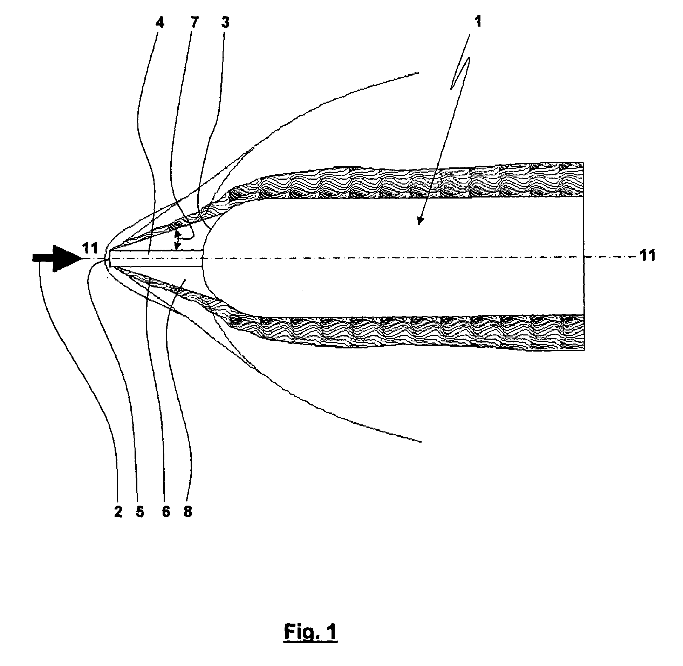

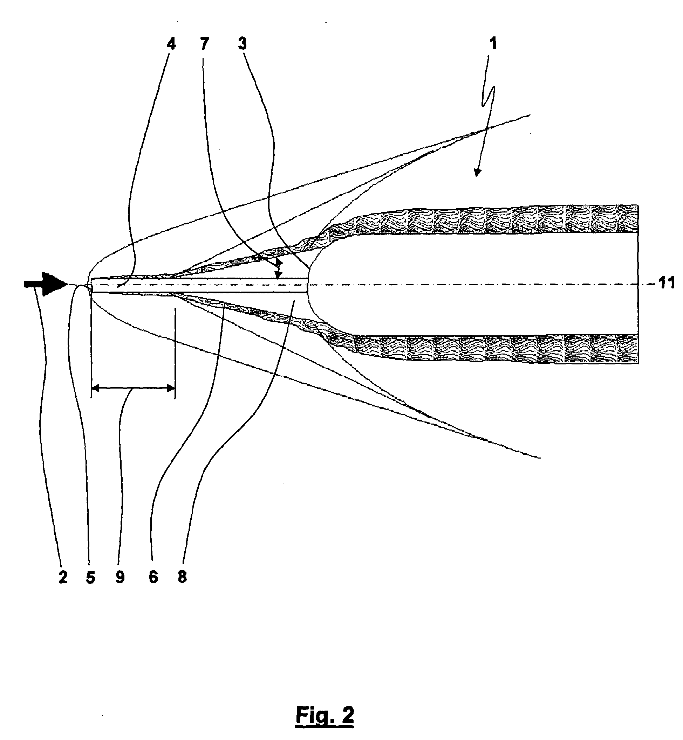

Bei Flugkörpern für den Überschallbereich werden im Bereich der vorderen Stirnfläche so genannte Aero-Spikes eingesetzt, die in Form eines Dornes oder eines Stabes direkt an einer Nase oder einem Dom des Flugkörpers angebracht sind und gegen die Strömung ausgerichtet sind. Eine Ablösung der Grenzschicht an einer Oberfläche des Aero-Spikes durch das Einwirken eines Bugstoßes ist dafür verantwortlich, dass der an sich intensive Bugstoß durch eine Kombination von wesentlich schwächeren schrägen Verdichtungsstößen ersetzt wird, vgl. Fig. 1. Dies hat zur Folge, dass Verluste in Folge der Verdichtungsstöße reduziert werden, was einen verringerten so genannten Wellenwiderstand bedeutet. Bis zu einer gewissen Längserstreckung des Aero-Spikes im Verhältnis zu seiner Quererstreckung oder einem Durchmesser des Flugkörpers findet eine Ablösung unmittelbar an einer vorderen Stirnseite des Aero-Spikes statt, so dass eine einfache Verlängerung des Aero-Spikes zu einer weiteren Reduzierung des Wellenwiderstandes führen kann. Allerdings ist festgestellt worden, dass ab einer bestimmten Länge des Aero-Spikes eine Ablösung der Grenzschicht erst hinter der vorderen Stirnseite des Aero-Spikes erfolgt. Die Länge einer sich bildenden so genannten Ablöseblase stabilisiert sich und verhält sich praktisch unabhängig von der Länge des Aero-Spikes, vgl. Fig. 2. Der Grund hierfür ist, dass die Größe einer Ablöseblase an dem Aero-Spike naturgemäß limitiert ist, wobei diese Größe insbesondere von der Form der vorderen Stirnseite und der Form des Aero-Spikes sowie von Strömungsparametern, wie beispielsweise dem Zustand der Grenzschicht an dem Aero-Spike, der Flugmachzahl und ähnlichem, abhängt. Dies kann dazu führen, dass die Effizienz einer gewählten Konfiguration eines Aero-Spikes von den vorherrschenden Flugbedingungen abhängig ist, so dass sich die Strömungswirkung mit verändernden Flugbedingungen ändern können.

Insbesondere bei Flug in Bodennähe können sehr hohe Staudrücke wirken, was beispielsweise dazu führen kann, dass sich eine Grenzschicht an dem Aero-Spike von einem laminaren Zustand zu eine turbulenten Zustand verändert, was zur Folge hat, dass eine Ablöseblase hinsichtlich Ihrer Erstreckung stark verringert wird. Dies bedingt wiederum eine Reduzierung des effektiven Schlankheitsgrades des Flugkörpers, wodurch der Bugwiderstand erhöht wird. Dieser Effekt kann durch eine einfache Vergrößerung der Länge des Aero-Spikes nicht zwingend beseitigt werden, da die Längserstreckung der Ablöseblase von der Länge des Aero-Spikes weitestgehend unabhängig ist.

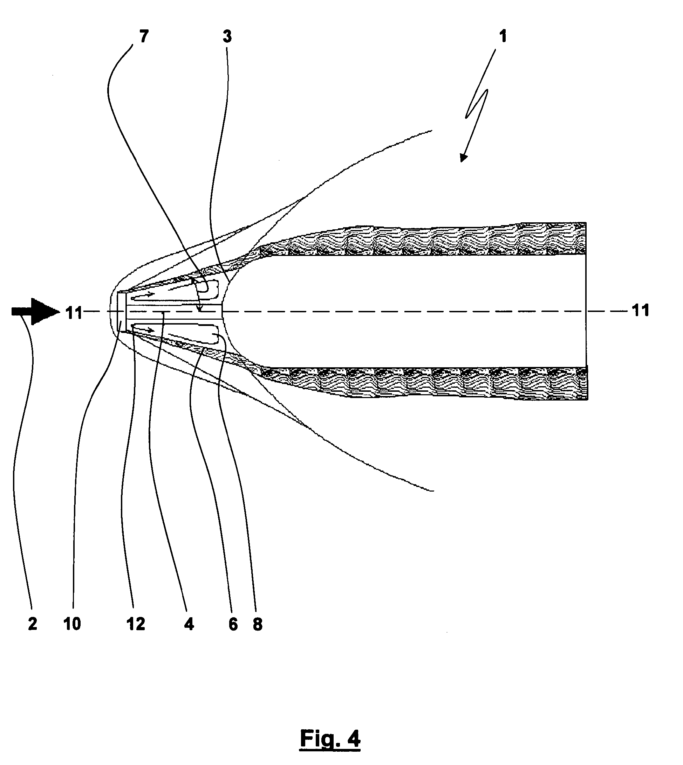

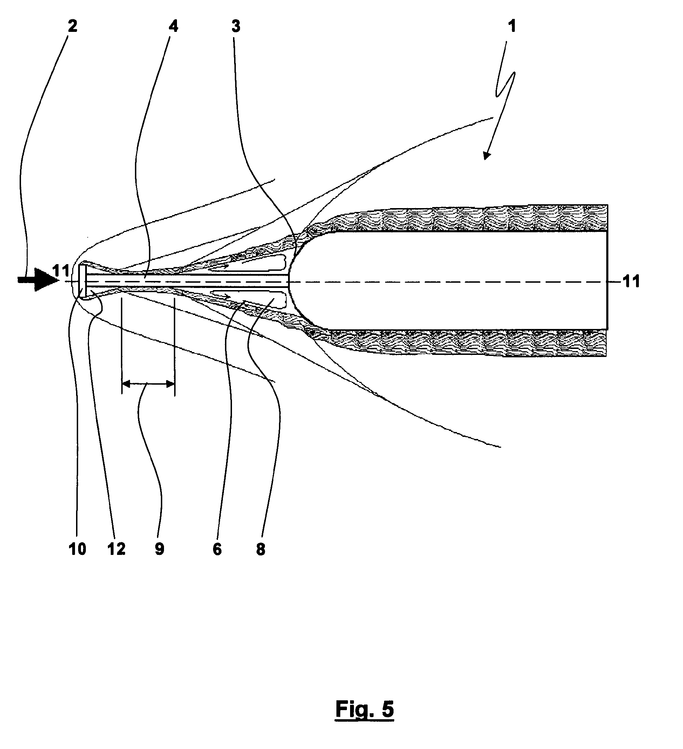

Als Kompromisslösung für die zuvor erwähnte Problematik wäre es weiterhin möglich, im Bereich der Stirnseite des Aero-Spikes eine Erweiterung, einen Prallkörper oder eine so genannte Aero-Disk anzuordnen, wodurch eine gewisse Stabilisierung erfolgen kann. Hierbei ist allerdings die Konfiguration und die Wahl der Geometrie der Aero-Disk auf die im Flugbetrieb zu erwartenden ungünstigsten Bedingungen auszulegen, so dass ein letztlich erzielbarer Gewinn suboptimal ist. Die Wirkung eines Aero-Spikes, der mit einer Aero-Disk ausgestattet ist, ist Fig. 4 zu entnehmen. Mit zunehmender Vergrößerung der Länge des Aero-Spikes tritt allerdings der Effekt ein, dass sich die im Bereich der Stirnseite des Flugkörpers sowie im Bereich der Aero-Disk gebildeten Ablöseblasen voneinander trennen, so dass zwischen diesen zwei Ablöseblasen ein Teilbereich gebildet ist, in dem sich die Strömung an den Aero-Spike anlegt, s. Fig. 5. Damit ist die eigentlich gewünschte Wirkung beseitigt und für derartige Strömungsbedingungen ist im Vergleich zu einem herkömmlichen Aero-Spike gemäß Fig. 2 der sich ergebende Gesamtwiderstand sogar um den durch die Aero-Disk hervorgerufenen zusätzlichen Anteil erhöht.

Der Wissensstand zur allgemeinen Problematik einer Reduzierung des Wellenwiderstandes unter Einsatz von Aero-Spikes an stumpfen Körpern kann beispielsweise den folgenden Veröffentlichungen entnommen werden.
Chang, P.K., "Separation of Flow", Pergamon Press, 1970, 777p. [1]
Fomin V.M., Tretyakov P.K., Taran J.-P. "Flow control using various plasma and aerodynamic approaches (Short review)", Aerospace Science and Technology, 8, 2004, pp, 411-421. [2]
Gnemmi P., Srulijes J., Roussel K., Runne K., "Flowfield Around Spiked-Tipped Bodies for High Attack Angles at Ach 4.5", Journal of Spacecraft and Rockets, Vol. 40, No. 5, pp. 622-631, Sept.-Oct. 2003. [3]
Huebner L.D., Mitchell A.M. and Boudreaux E.J. "Experimental Results on the Feasibility of an Aerospike Hypersonic Missiles," AIAA Paper 95-0737, Jan. 1995. [4]
Boudreaux E.J., Krishnamurty V.S., Mitchell A.M. and Shyy W., "Experiments and Analysis of an Aerospike Flow Environment for Protecting Infrared Missile Dome," RTO-MP-5, Proceedings of the RTO-Meeting "Missile Aerodynamics", Sorrento, Italy, 11-14 May 1998, NATO RTO, 1998. [5]

DE 3,713,607 offenbart einen Aero-Spike, welcher rohrartig ausgebildet ist mit einem massiven Wandungsmaterial. Eine Verbindung zwischen dem inneren Hohlraum des rohrartigen Aero-Spikes und der Umgebung der Mantelfläche ist durch radial orientierte Bohrungen oder Perforationen geschaffen, welche in den rohrförmigen Aero-Spike eingebracht sind. Hierbei kann sich der Durchmesser der Bohrungen mit einer Vergrößerung des Abstandes von dem vorderen Ende des Aero-Spikes vergrößern.

Weiterer Stand der Technik ist aus DE 199 53 701 A1 und US 6,527,221 B1 bekannt.

### AUFGABE DER ERFINDUNG

Der vorliegenden Erfindung liegt die Aufgabe zugrunde, einen Flugkörper vorzuschlagen, für den Beeinflussungen des Strömungsverhaltens und des Widerstandes, insbesondere durch die Flug- und Umgebungsbedingungen und/oder bei verhältnismäßig langen Aero-Spikes, reduziert werden sollen.

### LÖSUNG

Die Aufgabe der Erfindung wird erfindungsgemäß mit den Merkmalen des unabhängigen Patentanspruchs 1 gelöst. Eine weitere Lösung der der Erfindung zugrunde liegenden Aufgabe ist gegeben durch einen Flugkörper gemäß den Merkmalen des unabhängigen Patentanspruchs 6. Ein Flugkörper mit den Merkmalen des Anspruchs 8 stellt eine weitere erfindungsgemäße Lösung dar. Eine alternative oder kumulative Lösung der der Erfindung zugrunde liegenden Aufgabe ist gegeben für einen Flugkörper mit den Merkmalen des unabhängigen Anspruchs 11. Bevorzugte erfindungsgemäße Weiterbildung ergeben sich entsprechend den abhängigen Patentansprüchen 2 bis 5, 7 bis 10 und 12 bis 13.

### BESCHREIBUNG DER ERFINDUNG

Die Erfindung baut auf auf der in [5] offenbarten Erkenntnis, dass es vorteilhaft sein kann, den Aero-Spike mit einen hohlen Rohr auszubilden, der in der Literaturstelle auch als "Aeroscoop" bezeichnet wird. Infolge des Staudruckes im Bereich der vorderen Stirnseite des Aero-Spikes tritt Luft in das Innere des rohrförmigen Aero-Spikes ein. Der Aero-Spike besitzt mehrere Öffnungen, die entlang des Aero-Spikes angeordnet sind, durch die die Luft aus dem Inneren des Aero-Spikes heraus geblasen wird. Die heraus geblasene Luft führt dazu, dass eine Außenströmung und eine Druckwelle von dem Aero-Spike weggedrückt werden.

Unter Nutzung dieser Grunderkenntnis berücksichtigt die erste erfindungsgemäße Lösung gemäß Anspruch 1 weiterhin die Erkenntnis, dass die Erzeugung mehrerer diskreter Öffnungen gemäß [5] eine aufwändige Fertigung mit einer Einbringung der Öffnungen mit sich bringt. Weiterhin stellen die diskreten Öffnungen Schwächungen der Tragstruktur des Aero-Spikes dar, die beispielsweise die Ausbildung des Aero-Spikes mit einem vergrößerten Durchmesser oder vergrößerten Wandstärken mit sich zieht, was wiederum einen vergrößerten Widerstand bewirken kann.

Erfindungsgemäß ist der Aero-Spike zumindest in Teilbereichen oder vollständig mit einem porösen Material gebildet. In einem derartigen porösen Material können Strömungskanäle durch offene Poren gebildet sein, durch die gezielt Luft "ausgeblasen" werden kann, um ein unerwünschtes Anlegen einer Strömung zu vermeiden. Von Vorteil kann hierbei sein, dass derartige Poren nicht diskret verteilt sind und somit nur lokal auf die Umströmung des Aero-Spikes einwirken, sondern vielmehr die Strömungskanäle fein über Außenflächen des porösen Materiales verteilt sein können. Hierdurch kann eine nahezu kontinuierliche Strömungsbeeinflussung erfolgen, wobei mit der ausströmenden Luft der Aero-Spike "kissenartig" mit einem Polster aus ausströmender Luft umgeben sein kann.

Eine Gestaltung der Geometrie der mit den offenen Poren gebildeten Strömungskanäle kann während der Fertigung des Aero-Spikes aus dem porösen Material einfach vorgegeben werden, beispielsweise durch
- Vorgabe von Partikelgrößen eines zu dem porösen Material umzuwandelnden Rohmaterials,
- die Gestaltung von Druckverhältnissen bei einem Verpressen derartiger Partikel,
- die Auswahl geeigneter Zusatzpartikel,
- einen Einsatz und eine Dosierung eines Treibmittels oder Porenbildners
- die Gestaltung der Temperaturverhältnisse und ähnliches.

Weiterhin kann ausgenutzt werden, dass in einem porösen Material unter Umständen nicht lediglich Poren gleicher Strömungsquerschnitte gebildet sind, sondern sich beispielsweise eine stochastische Verteilung der Porengrößen ergeben kann, so dass unter Umständen die Strömungsverhältnisse in einzelnen Poren unterschiedlich gestaltet werden können. Damit können auch die Druckverhältnisse bei Austritt der Luft aus dem Aero-Spike und die Austrittsgeschwindigkeiten stochastisch verteilt werden. wodurch sich eine verbesserte Einwirkung auf die Umströmung ergeben kann. Beispielsweise sind die Porengrößen um einen Mittelwert stochastisch oder mit einer Normalverteilung verteilt.

Andererseits hat sich gezeigt, dass für den Fall, dass ein verhältnismäßig großer Anteil einer von Austrittsöffnungen überdeckten Austrittsfläche für Luft im Bereich der Mantelfläche des Aero-Spikes gegenüber den geschlossenen Teilbereichen der Mantelfläche gewünscht ist, die diskrete Anordnung von Öffnungen, beispielsweise in Form von Radialbohrungen, nachteilig ist, da hierdurch der Aero-Spike zu stark geschwächt wird. Für eine Bildung der Austrittsöffnungen und Strömungskanäle mit dem erfindungsgemäß eingesetztem porösen Material kann der Anteil der Austrittsfläche gegenüber den geschlossenen Teilbereichen bis zu einem Verhältnis von 1:1 vorgegeben werden.

Ein mögliches poröses Material, mit dem zumindest Teilbereiche des Aero-Spikes gebildet sein können, kann ein Sintermaterial oder Sintermetall sein. Bei einem derartigen Sintern werden bspw. Pulvermassen vorgeformt, so dass sich ein minimaler Zusammenhalt der Pulverpartikel ergibt. Ein derartiges Zwischenprodukt wird einer Wärmebehandlung unterhalb der Schmelztemperatur des Werkstoffes ausgesetzt mit einer Verdichtung und Aushärtung. Die Herstellung des Zwischenproduktes kann hierbei durch ein Verpressen der Pulvermassen und/oder durch Formung und anschließendes Trocknen erfolgen. Unter ein derartiges erfindungsgemäßes Sintern fällt auch eine Pulvermetallurgie oder der Einsatz plastikartiger gesinterter Kunststoffe.

Ebenfalls möglich ist ein Einsatz eines Keramikwerkstoffes, der sich durch eine besondere Verschleißfestigkeit, Härte, Druckfestigkeit, Hochtemperaturbeständigkeit, gute Wärmeleitfähigkeit und/oder elektrische Isolation auszeichnet.

Für eine erste Ausgestaltung ist der Aero-Spike als Vollquerschnitt ausgebildet. Beispielsweise kann im Bereich einer vorderen Stirnfläche des Aero-Spikes ein Staudruck erzeugt werden, welcher größer ist als der zumindest in Teilbereichen der Mantelfläche des Aero-Spikes wirkende Druck. In Folge des Druckgefälles wird dann Luft durch die Poren des Aero-Spikes von der vorderen Stirnfläche zu der Mantelfläche transportiert.

Für eine alternative Ausgestaltungsform kann der Aero-Spike eine Längsausnehmung besitzen, die auf der Stirnseite des Aero-Spikes offen ist. Dies bewirkt, dass der Staudruck in der Längsausnehmung wirkt, von der aus dann eine Verteilung der Luft über die mit den offenen Poren gebildeten Strömungskanäle erfolgt. Die Länge von, insbesondere radial orientierten, Strömungskanälen korreliert dabei u. U. mit der Wandstärke des die Längsausnehmung umgebenden Materiales, so dass diese eine konstruktive Stellgröße für die Gestaltung der Durchströmung des Aero-Spikes darstellen kann.

Für eine zweite Lösung der der Erfindung zugrunde liegende Aufgabe besitzt der Aero-Spike eine Längsausnehmung, die in ihrem vorderen Endbereich geschlossen ist, so dass sich die Längsausnehmung nur über einen Teilbereich des Aero-Spikes erstreckt. Von der Längsausnehmung führen zu der Mantelfläche des Aero-Spikes Strömungskanäle, die beliebig gebildet sein können, also in Form von Bohrungen, Ausnehmungen, Schlitzen, Perforationen und/oder in Form von offenen Poren eines porösen Materiales. Während Dokument [5] davon ausgeht, dass eine Beeinflussung der Umströmung des Aero-Spikes nur zustande kommt über das Druckgefälle zwischen dem Staudruck im Bereich der vorderen Stirnfläche und der Mantelfläche des Aero-Spikes ist erfindungsgemäß erkannt worden, dass über die Längserstreckung des Aero-Spikes der Druck im Bereich der Mantelfläche stark schwankt, insbesondere zwischen einer Ablöseblase, die an der vorderen Stirnfläche oder einem Dom des Flugkörpers vorgelagert ist und einem Bereich, in dem die Strömung an den Aero-Spike unerwünscht angelegt ist. Dies hat zur Folge, dass auch ohne stirnseitige Öffnung der Längsausnehmung in Folge des erwähnten Druckgefälles Luft in Bereichen der Mantelfläche mit größerem Druck in das Innere der axial geschlossenen Längsausnehmung eintritt, von wo diese in Bereichen mit geringerem Druck wieder aus der Mantelfläche austritt. Unter Umständen ist ein derartiger Effekt als selbstregulierend zu bezeichnen, da für Fälle, Flugbedingungen und Strömungsbedingungen, in denen sich wie gewünscht eines Ablöseblase über die Gesamte Länge des Aero-Spikes erstreckt, das Druckgefälle über die Längsachse des Aero-Spikes verhältnismäßig klein, so dass der vorgenannte Effekt in geringem Maße auftritt und eine Strömungsbeeinflussung durch die erfindungsgemäßen Strömungskanäle nicht erfolgt. In Fällen, in denen allerdings ein unerwünschtes Anlegen der Strömung erfolgt, ist dieses unmittelbar mit der Ausbildung eines vergrößerten Druckgefälles verbunden, womit selbstregulierend vergrößerte Luftströme durch die Strömungskanäle initiiert werden, die dem unerwünschten Anlegen der Strömung entgegenwirken.

Bei der Gestaltung der Mantelfläche des Aero-Spikes wäre der Fachmann üblicherweise bemüht, die Mantelfläche des Aero-Spikes möglichst glatt zu gestalten. Abweichend von einem derartigen, von einem Vorurteil der Fachwelt veranlassten Gestaltungskriterium schlägt eine alternative oder kumulative erfindungsgemäße Lösung vor, die Mantelfläche des Aero-Spikes gezielt mit einer Rauhigkeit in Richtung der Längsachse auszustatten. Hierbei wird unter einer Rauhigkeit eine in Längsrichtung veränderlichte Oberflächenkontur bezeichnet, für die sich lokale Abweichungen ergeben, die in radialer Richtung größer sind als 100 µm, vorzugsweise größer sind als 200 oder 300 µm. Untersuchungen haben gezeigt, dass auch durch gezielten Einsatz einer derartigen Rauhigkeit ein unerwünschtes Anlegen einer Strömung an den Aero-Spike vermieden werden kann. Eine derartige Rauhigkeit kann sich durch die Fertigung der Oberfläche des Aero-Spikes ergeben, durch Einbringung nachträglicher Rillen, Riefen, Kerben, Aufbringung einer Beschichtung aus Partikeln gleicher oder unterschiedlicher Größe, etc.

Für einen besonderen Vorschlag der Erfindung ist die Mantelfläche des Aero-Spikes mit die Rauhigkeit erhöhenden Elementen versehen. Bei derartigen Elementen kann es sich beispielsweise um Partikel gleicher oder unterschiedlicher Größe, stoffschlüssig angebundene Partikel wie beispielsweise Prismen oder ähnliches handeln.

Für einen weiteren erfindungsgemäßen Flugkörper sind die Rauhigkeiten oder die die Rauhigkeit erhöhenden Elemente in Richtung der Längsachse asymmetrisch, und zwar derart, dass eine Strömung in Richtung des vorderen Endbereiches des Aero-Spikes begünstigt wird. Eine derart begünstigte Strömung wirkt gerade einem Anlegen der Strömung an den Aero-Spike entgegen. Beispielsweise handelt es sich bei derartigen asymmetrischen Elementen um asymmetrische Prismen, um gegenüber der Mantelfläche geneigte "schuppenartige" Elemente oder ähnliches.

Für eine alternative oder kumulative weitere Lösung der der Erfindung zugrunde liegenden Aufgabe ist die Mantelfläche des Aero-Spikes mit in Richtung der Längsachse verlaufenden Rippen, Vorsprüngen, Nuten, Rillen, Ausnehmungen oder Vertiefungen ausgestattet, die gleichförmig oder ungleichförmig über den Umfang des Aero-Spikes verteilt sein können und sich über die gesamte Länge des Aero-Spikes erstrecken können oder nur einen Teillängsbereich. Durch derartige Formgebungen, die einstückig von dem Aero-Spike oder durch Anbindung zusätzlicher Elemente ausgebildet sein können, kann die wirksame Oberfläche des Aero-Spikes vergrößert werden, wodurch sich ein von einer Wandgrenzschicht überdeckter Bereich vergrößert, was zu einer verstärkten Abbremsung der Strömung führt. Durch eine derartige vergrößerte Abbremsung können vergrößerte Ablöseblasen erzeugt werden, die letztlich zu einer Verringerung des Ablösewinkels und einer Reduzierung des Widerstandes führen.

Sämtliche vorgenannten Maßnahmen können Einsatz finden für einen beliebigen Aero-Spike mit beliebiger Länge, wobei sich die Maßnahmen über die gesamte Längserstreckung des Aero-Spikes erstrecken können oder nur über einen Teilbereich des Aero-Spikes, insbesondere einen Teilbereich, in dem a priori bekannt ist, dass hier eine verstärkte Neigung zum Anlegen der Strömung besteht. Besondere Wirkung entfalten die erfindungsgemäßen Maßnahmen, wenn die Länge des Aero-Spikes größer ist als der Durchmesser der vorderen Stirnseite des Flugkörpers. Dieser Längenbeziehung liegt die Erkenntnis zugrunde, dass sich eine Ablöseblase vor einer Stirnfläche oder einem Dom des Flugkörpers ungefähr über eine Axialerstreckung des Aero-Spikes entsprechend dem Durchmesser des Domes erstreckt, so dass ein Anlegen der Strömung allenfalls vor dieser Axialerstreckung zu erwarten ist. Dieser Erkenntnis kann dadurch Rechnung getragen werden, dass die erfindungsgemäßen Maßnahmen vorrangig in Axialbereichen des Aero-Spikes eingesetzt werden, die dem Dom oder einer vorderen Stirnfläche des Flugkörpers um mehr als dem maximalen Durchmesser des Domes vorgelagert sind.

Die zuvor als selbständige Lösungen dargestellten erfindungsgemäßen Ausgestaltungen können alternativ oder kumulativ zum Einsatz kommen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen schematisch dargestellten Flugkörper entsprechend dem Stand der Technik in Seitenansicht mit einem verhältnismäßig kurzen Aero-Spike in umströmtem Zustand.
- **Fig. 2**: zeigt einen schematisch dargestellten Flugkörper entsprechend dem Stand der Technik in Seitenansicht mit einem verhältnismäßig langen Aero-Spike in umströmtem Zustand.
- **Fig. 3**: zeigt aus dem Stand der Technik bekannte Konfigurationen eines Flugkörpers mit Aero-Spike und unterschiedlichen Endbereichen des Aero-Spikes in Seitenansicht.
- **Fig.4**: zeigt einen schematisch dargestellten Flugkörper entsprechend dem Stand der Technik in Seitenansicht mit einem eine Aero-Disk aufweisenden, verhältnismäßig kurzen Aero-Spike bei Anströmung in einem Auslegungsbereich.
- **Fig. 5**: zeigt einen schematisch dargestellten Flugkörper entsprechend dem Stand der Technik in Seitenansicht mit einem eine Aero-Disk aufweisenden, verhältnismäßig langen Aero-Spike.
- **Fig. 6**: zeigt einen erfindungsgemäßen Flugkörper in schematischer Seitenansicht mit der sich ergebenden verbesserten Umströmung.
- **Fig. 7**: zeigt einen Aero-Spike mit einer stirnseitig offenen Längsausnehmung für einen Einsatz in einem erfindungsgemäßen Flugkörper in einem Teillängsschnitt.
- **Fig. 8**: zeigt die Druckverhältnisse über die Längserstreckung eines Aero-Spikes für eine Umströmung eines Flugkörpers entsprechend Fig. 5.
- **Fig. 9**: zeigt einen Aero-Spike mit einer stirnseitig geschlossenen Längsausnehmung für einen Einsatz in einem erfindungsgemäßen Flugkörper in einem Teillängsschnitt.
- **Fig. 10**: zeigt einen Aero-Spike mit einer mit einer Rauhigkeit versehenen Mantelfläche für einen Einsatz in einem erfindungsgemäßen Flugkörper in einer Seitenansicht.
- **Fig.11**: zeigt einen Aero-Spike mit einer mit zusätzlichen Rauhigkeitselementen versehenen Mantelfläche für einen Einsatz in einem erfindungsgemäßen Flugkörper in einer Seitenansicht.
- **Fig. 12**: zeigt ein Detail XII für die in Fig. 11 dargestellte Ausführungsform eines Aero-Spikes.
- Fig.13: zeigt eine weitere Ausführungsform eines Aero-Spikes mit Rippen und/oder Rillen im Bereich der Mantelfläche für einen Einsatz in einem erfindungsgemäßen Flugkörper in einer Seitenansicht.
- **Fig. 14**: zeigt den Aero-Spike gemäß Fig. 13 in einem Querschnitt XIV-XIV.
- **Fig. 15**: zeigt eine weitere Ausführungsform eines Aero-Spikes mit Rippen im Bereich der Mantelfläche für einen Einsatz in einem erfindungsgemäßen Flugkörper in einer Seitenansicht.
- **Fig. 16**: zeigt den Aero-Spike gemäß Fig. 15 in einem Querschnitt XVI-XVI.

### FIGURENBESCHREIBUNG

**Fig. 1** zeigt einen Flugkörper 1. Bei einem derartigen Flugkörper handelt es sich insbesondere um eine Rakete, eine Drohne oder ein Projektil oder einen Flugkörper, der wenigstens über einen Teil seiner Flugbahn durch einen Antrieb selbstangetrieben ist, beispielsweise durch ein Düsentriebwerk, welches sowohl den Brennstoff als auch ein Oxidationsmittel dafür trägt. Hierbei kann es sich um nach dem Start gelenkte oder ungelenkte Flugkörper handeln, die sich lediglich in der Luft bewegen oder zumindest teilweise im Wasser. Der Flugkörper bewegt sich zumindest teilweise in der Luft mit Überschallgeschwindigkeit. Gleichermaßen kann es sich bei dem Flugkörper um ein Fluggerät, Luftfahrzeug oder Kampfflugzeug handeln, welches oder dessen Anbauteile
- eine in erster, grober Näherung zylindrische Form besitzen,
- eine stumpfe Nase oder Stirnfläche besitzen,
- sich zumindest teilweise mit Überschallgeschwindigkeit bewegen und
- mit einem Aero-Spike ausgestattet sind,
insbesondere Außentanks, Abwurfmunition, Pylone, Antennen an Flügeln.

Der Flugkörper 1 ist zur Vereinfachung bei Anströmung in eine axiale Strömungsrichtung 2 dargestellt ist. Einer Stirnfläche 3, einem Dom oder einer Nase ist ein Aero-Spike 4 stromaufwärts vorgelagert, wobei sich der Aero-Spike 4 koaxial zur Längsachse des Flugkörpers 1 erstreckt.

Weiterhin ist in Fig. 1 die Umströmung des Flugkörpers 1 dargestellt: Im Bereich einer vorderen Stirnfläche 5 des Aero-Spikes 4 bildet sich unter einem Ablösewinkel 7 eine abgelöste Grenzschicht 6, die zur Folge hat, dass (anstelle eines intensiven Bugstoßes für einen Flugkörper 1 ohne Aero-Spike 4) die abgelöste Grenzschicht 6 im Bereich der Stirnfläche 3 mit einem wesentlich schwächeren, schrägen Verdichtungsstoß auf die Stirnfläche 3 des Flugkörpers trifft, was zu einer Reduktion des Wellenwiderstandes führt. Innerhalb der unter dem Ablösewinkel 7 verlaufenden abgelösten Grenzschicht 6 bildet sich eine bugseitige Ablöseblase 8 aus, in der Luft auch gegen die Strömungsrichtung 2 zirkulieren kann.

Während gemäß Fig. 1 die Längserstreckung des Aero-Spikes 4 dem Durchmesser des Flugkörpers 1 entspricht oder kleiner ist als diese, ist in Fig. 2 ein Flugkörper 1 dargestellt mit einem Aero-Spike 4, dessen Längserstreckung größer ist als der Durchmesser des Querschnittes des Flugkörpers 1 oder dessen maximale stirnseitige Quererstreckung, insbesondere ungefähr doppelt so groß. In einem derartigen Fall kommt es erst hinter einem Bereich 9, in dem die Strömung an die Mantelfläche des Aero-Spikes 4 angelegt ist, unter dem Ablösewinkel 7 zu einer abgelösten Grenzschicht 6. Innerhalb der unter dem Ablösewinkel 7 verlaufenden abgelösten Grenzschicht 6 bildet sich eine bugseitige Ablöseblase 8 aus, in der Luft auch gegen die Strömungsrichtung 2 zirkulieren kann.

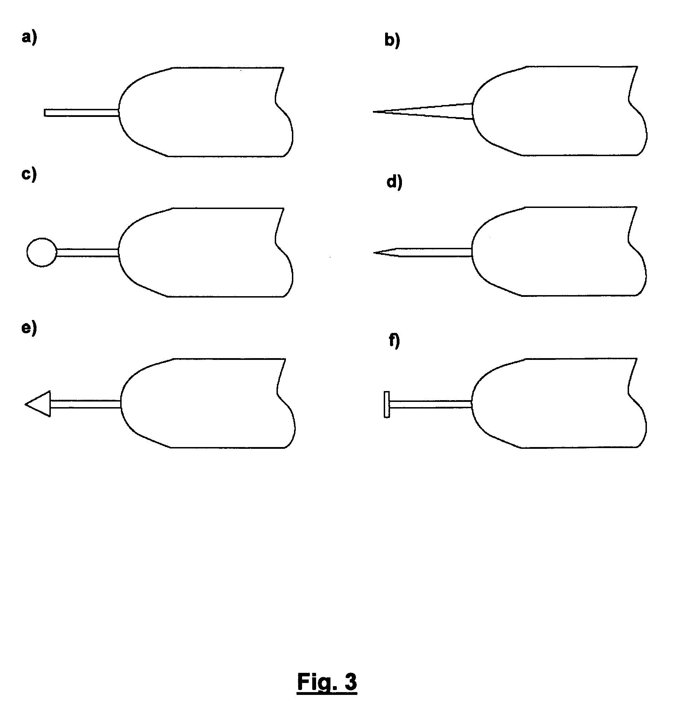

**Fig. 3** zeigt beispielhaft unterschiedliche Ausgestaltungsformen für prinzipielle Grundkonfigurationen eines Aero-Spikes 4 an einer Stirnfläche 3 eines Flugkörpers 1, nämlich:
- Fig. 3a einen Aero-Spike mit konstantem Querschnitt, der beispielsweise zylinderförmig ausgebildet ist,
- Fig. 3b einen Aero-Spike mit dreieckförmigem Längsschnitt oder kegelförmiger Konfiguration,
- Fig. 3c einen Aero-Spike mit einer sphärischen Verdickung an dem distalen Ende,
- Fig. 3d einen Aero-Spike mit einem angespritzten oder kegelförmigen Endbereich und einem mittigen Teilbereich konstanten Querschnitts,
- Fig. 3e einen Aero-Spike mit einer Verdickung des distalen Endes, die im Längsschnitt ungefähr dreieckförmig mit in Flugrichtung orientierter Spitze ausgebildet ist,
- Fig. 3f einen Aero-Spike mit einer Verdickung im distalen Endbereich in Form einer Scheibe,
- Fig. 3g einen Aero-Spike mit einem "Jet-Spike", bei dem mittels Pfeilen an dem distalen Ende des Aero-Spikes das Austreten eines in Flugrichtung gerichteten Gas- und/oder Flüssigkeitsstrahles angedeutet ist und
- Fig. 3h einen Aero-Spike mit einem "Beam-Spike", für den eine lokalisierte optische, elektrische oder elektromagnetische Erhitzung der Luft vor dem Bugstoß erfolgt.

**Fig. 4** zeigt die Umströmung eines Flugkörpers 1, welcher einen mit einer Aero-Disk 10 ausgestatteten Aero-Spike 4 besitzt. In einem derartigen Fall kommt es nicht ungefähr im Bereich der Längsachse 11-11 im Bereich der Stirnfläche 5 des Aero-Spikes entsprechend Fig. 1 zur Strömungsablösung, sondern vielmehr im radialen Randbereich der Aero-Disk 10, so dass die abgelöste Grenzschicht 6 radial weiter nach außen verlagert ist. Bei Einsatz einer Aero-Disk 10 bildet sich naturgemäß hinter der Aero-Disk eine "heckseitige" Ablöseblase 12 aus, die für die gemäß Fig. 4 dargestellten Bedingungen gemeinsam mit der bugseitigen Ablöseblase 8, die der Stirnfläche3 des Flugkörpers 1 unmittelbar vorgelagert ist, zu einer gemeinsamen längeren Ablöseblase verbunden ist. Durch die Vereinigung der Ablöseblasen 8, 12 kann eine gemeinsame Ablöseblase mit einem flacheren Ablösewinkel 7 erzielt werden, was eine Reduzierung des Bugwiderstandes zur Folge hat.

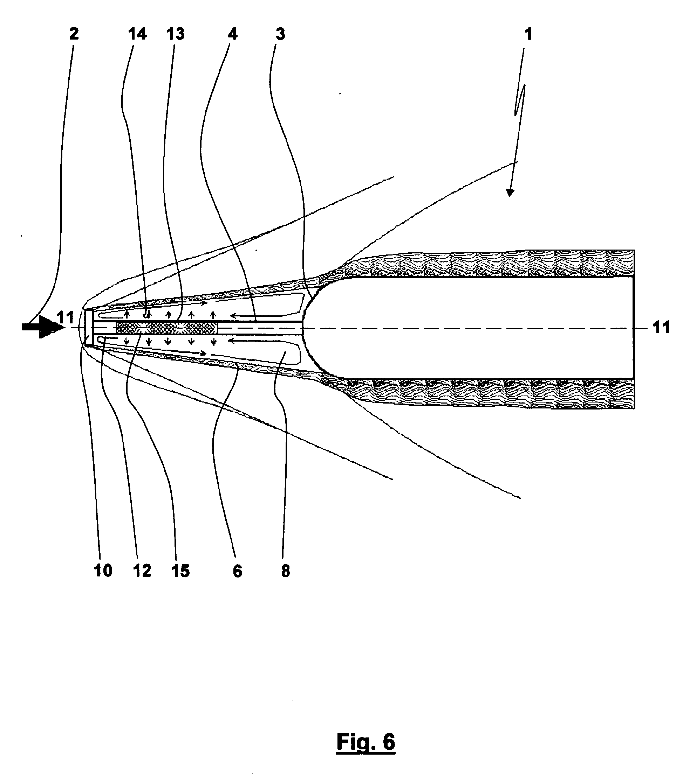

**Fig. 5.** zeigt einen Flugkörper 1 in veränderten Flugbedingungen, insbesondere mit einem gegenüber Fig. 4 verlängerten Aero-Spike 4. Für derartige Bedingungen ist die bugseitige Ablöseblase 8 über einen Bereich 9 angelegter Strömung getrennt von der heckseitigen Ablöseblase 12 hinter der Aero-Disk 10. Ziel der vorliegenden Erfindung ist es, einen derartigen Bereich 9 einer angelegten Strömung zu vermeiden, so dass die Ablöseblasen 8, 12 ineinander übergehen zu einer einzigen Ablösebase, wie dieses in **Fig. 6** dargestellt ist.

Dies wir erfindungsgemäß dadurch erreicht, dass aus einer Mantelfläche 13 des Aero-Spikes 4 Luft in Austrittsrichtungen 14 austritt, die "kissenartig" die Mantelfläche 13 umgibt und die abgelöste Grenzschicht 6 von dem Aero-Spike 4 "weg drückt". Hierzu sind in dem Aero-Spike Strömungskanäle 15 vorgesehen, die in die Mantelfläche 13 münden, beispielsweise bei radialer Orientierung. Bei einem derartigen Strömungskanal kann es sich bspw. um
- einen Schlitz, insbesondere einen Längsschlitz oder Querschlitz,
- eine Bohrung,
- eine Perforation,
- beliebige Ausnehmungen
handeln. Gemäß einem besonderen erfindungsgemäßen Vorschlag ist der Aero-Spike 4 zumindest teilweise mit einem porösen Material gebildet, wobei in diesem Fall die Strömungskanäle 15 zumindest teilweise von Poren des porösen Materiales gebildet sein.

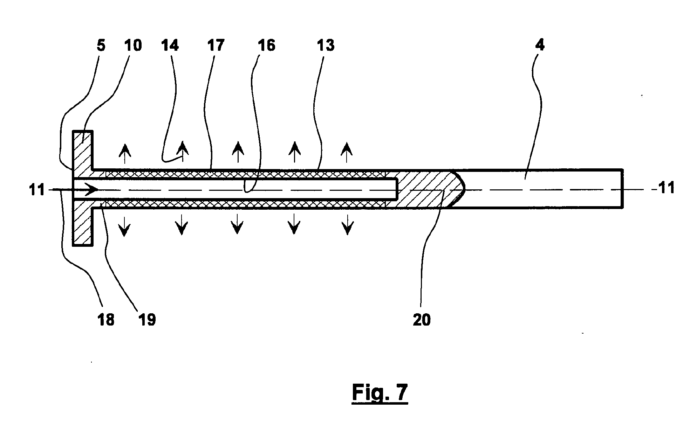

Gemäß **Fig. 7** besitzt der Aero-Spike 4 eine von der vorderen Stirnfläche 5 ausgehende, in Richtung der Längsachse 11-11 orientierte Längsausnehmung 16, die beispielsweise als Sacklochbohrung ausgebildet ist. Als nicht zwingend vorhandenes Merkmal zeigt Fig. 7 weiterhin eine im Bereich der Stirnseite des Aero-Spikes 4 angeordnete Aero-Disk 10. Hinter der Aero-Disk 10 ist die Längsausnehmung 16 mit einem hohlzylinderförmigen porösen Teilbereich 17 gebildet, bei dem Poren die Strömungskanäle 15 bilden und die Längsausnehmung 16 mit der Mantelfläche 13 strömungsdurchlässig verbinden. Bei bewegtem Flugkörper 1 wirkt ein Staudruck 18 in der Längsausnehmung 16, so dass es infolge des Druckgefälles zwischen dem Staudruck 18 in der Längsausnehmung 16 einerseits und im Bereich der Mantelfläche 13 andererseits zu einem Transport von Luft von der Längsausnehmung 16 zu der Umgebung der Mantelfläche 13 des Aero-Spikes 4 kommt. Der poröse Teilbereich 17 ist vorzugsweise stoffschlüssig an einen endseitigen Teilbereich 19 sowie einem der Stirnfläche 3 zugewandten Teilbereich 20 angebunden. Der endseitige Teilbereich 19 kann ein- oder mehrstückig mit der Aero-Disk 10 ausgebildet sein.

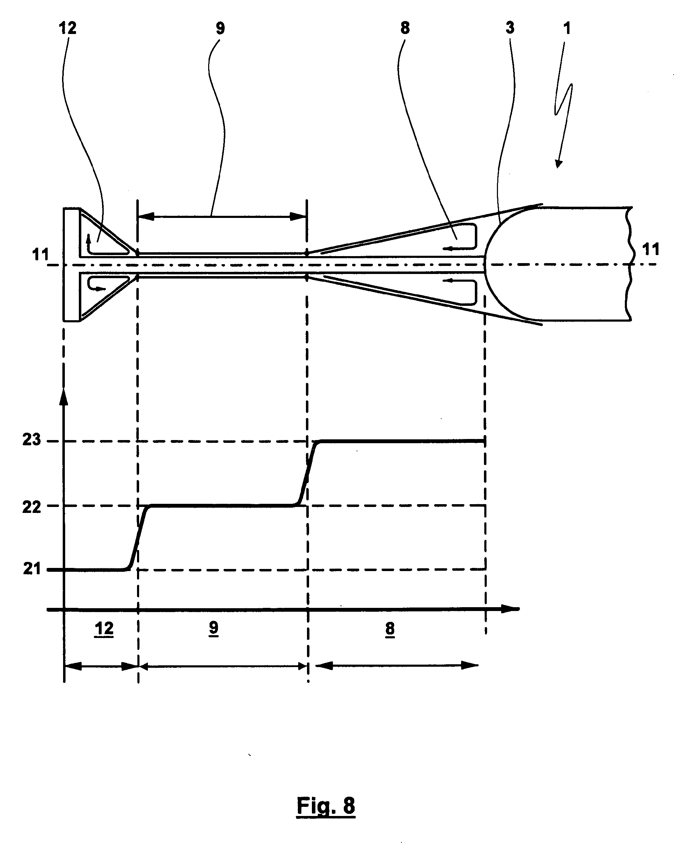

**Fig. 8** zeigt schematisch eine im Wesentlichen Fig. 5 entsprechende Umströmung eines Flugkörpers 1 mit dem zugeordneten Druckverlauf über die Längserstreckung des Aero-Spikes 4. Hierbei ist erfindungsgemäß festgestellt worden, dass im Bereich der Ablöseblase 12 ein Druck 21 vorherrscht, der kleiner ist als der Druck 22 im Bereich 9 angelegter Strömung, wobei der Druck 22 im Wesentlichen p_{∞} entspricht. Der Druck 22 im Bereich 9 der angelegten Strömung ist wiederum kleiner als der Druck 23 im Bereich der bugseitigen Ablöseblase 8.

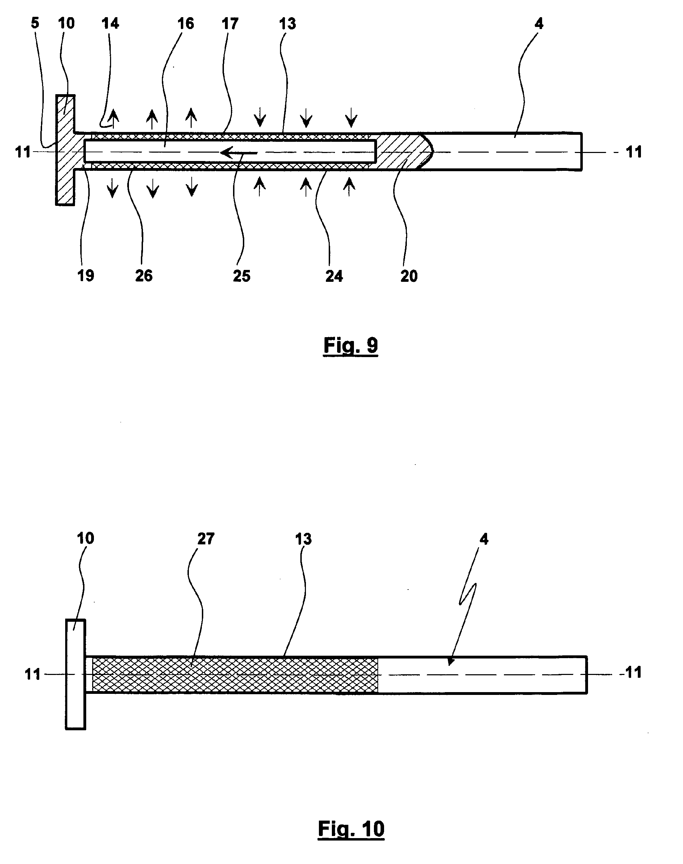

Den zuvor erläuterten Verlauf des Druckes über die Längserstreckung macht sich die in Fig. 9 dargestellte Ausführungsform eines Aero-Spikes 4 zu nutze, bei der die Längsausnehmung 16 als beidseitig in axialer Richtung geschlossene Ausnehmung ausgebildet ist. In einem Bereich großen Druckes 24 tritt Luft über die Strömungskanäle 15 von außen in die Längsausnehmung 16 ein. Diese Luft wird in der Längsausnehmung 16 in eine Förderrichtung 25 entgegen der Strömungsrichtung 2 transportiert und tritt im Bereich 26 geringeren Druckes wieder radial nach außen über die Strömungskanäle 15 durch die Mantelfläche des Aero-Spikes 4 nach außen aus. Bei dem Bereich großen Druckes 24 handelt es sich insbesondere um den Bereich 9 angelegter Strömung und/oder den bugseitigen Ablösebereich 8, während der Bereich kleineren Druckes vorzugsweise die heckseitige Ablöseblase 12 und/oder der Bereich 9 angelegter Strömung ist.

Für das Ausblasen von Luft durch Strömungskanäle können die Strömungskanäle 15 (vorrangig) radial orientiert sein. U. U. kann es vorteilhaft sein, wenn Strömungskanäle 15 zumindest teilweise gegenüber einer derartigen radialen Orientierung in Richtung der Stirnfläche 5 geneigt sind, so dass die aus Strömungskanälen 15 austretende Luft eine Geschwindigkeitskomponente aufweist, die der Umströmung entgegengerichtet ist.

**Fig. 10** zeigt einen Aero-Spike 4, bei dem die Mantelfläche 13 mit einer Rauhigkeit 27 versehen ist, bei der es sich beispielsweise um eine lokale Riffelung, eine Aufrauung, raue Zusatzelemente oder ähnliches handeln kann. Durch die Rauhigkeit 27 wird die Wandströmung stark abgebremst, da eine raue Oberfläche wesentlich höhere Impulsverluste der Strömung verursacht und somit eine Ablösung in derartigen Bereichen begünstigt wird. Die Ausrichtung der einzelnen Rauhigkeitselemente kann der gewünschten Strömungsrichtung an der Oberfläche angepasst werden derart, dass die Wandströmung in Richtung des freien Endes des Aero-Spikes 4 begünstigt wird und eine Strömung in Gegenrichtung verhindert wird.

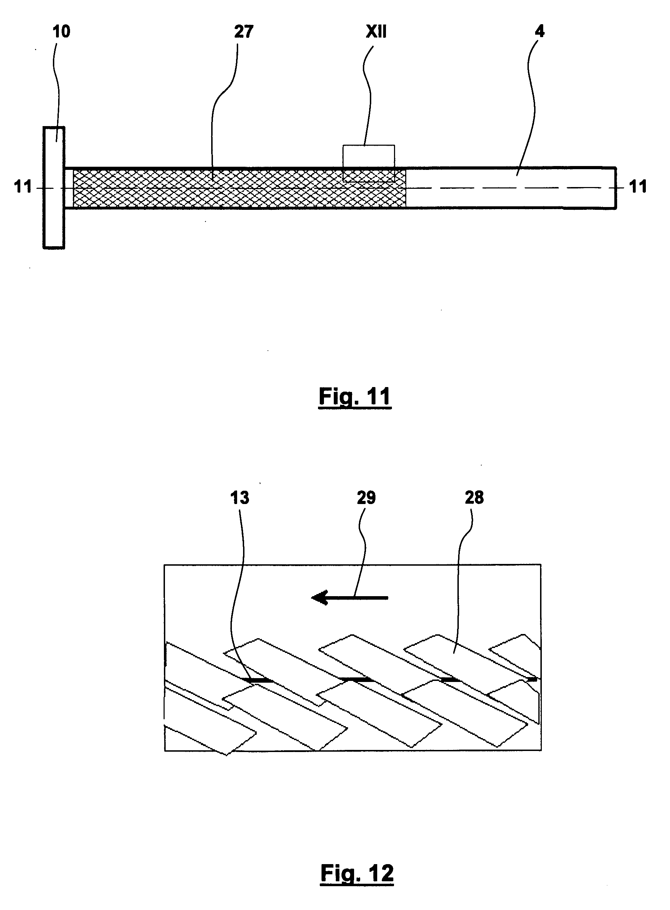

Eine derartige Ausführungsform zeigt **Fig. 11** und das Detail gemäß **Fig. 12,** für die die Mantelfläche 13 des Aero-Spikes 4 mit einzelnen Rauhigkeitselementen 28 versehen ist. Hierbei kann es sich beispielsweise um aufgespritzte Partikel, Zusatzelemente, Prismen oder ähnliches handeln. Die Rauhigkeitselemente 28 können, wie in Fig. 12 dargestellt, schuppenartig ausgebildet sein und in Richtung des freien Endes des Aero-Spikes geneigt sein, so dass eine begünstigte Strömungsrichtung 29 im Bereich der Mantelfläche 13 gegeben ist, während eine entgegengesetzte Strömung "gesperrt" ist.

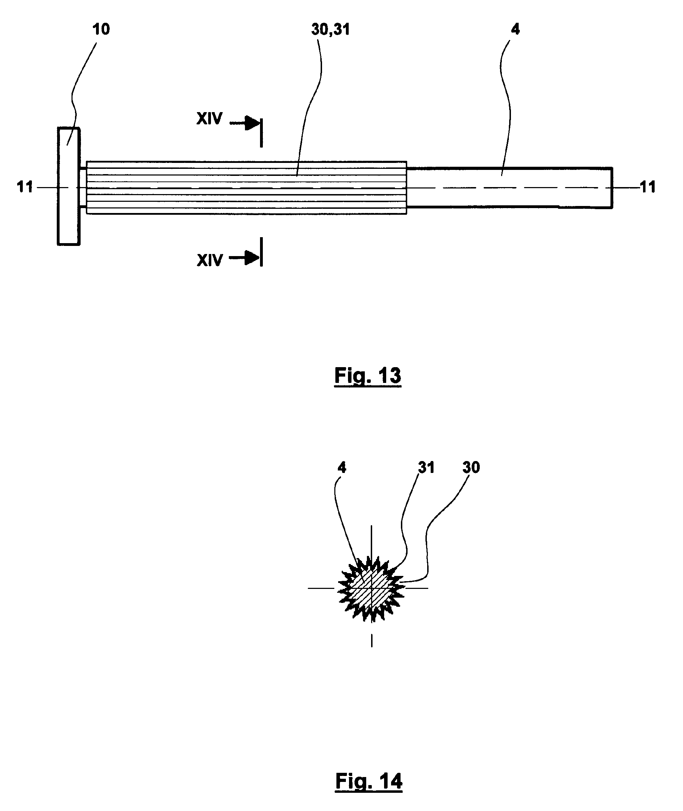

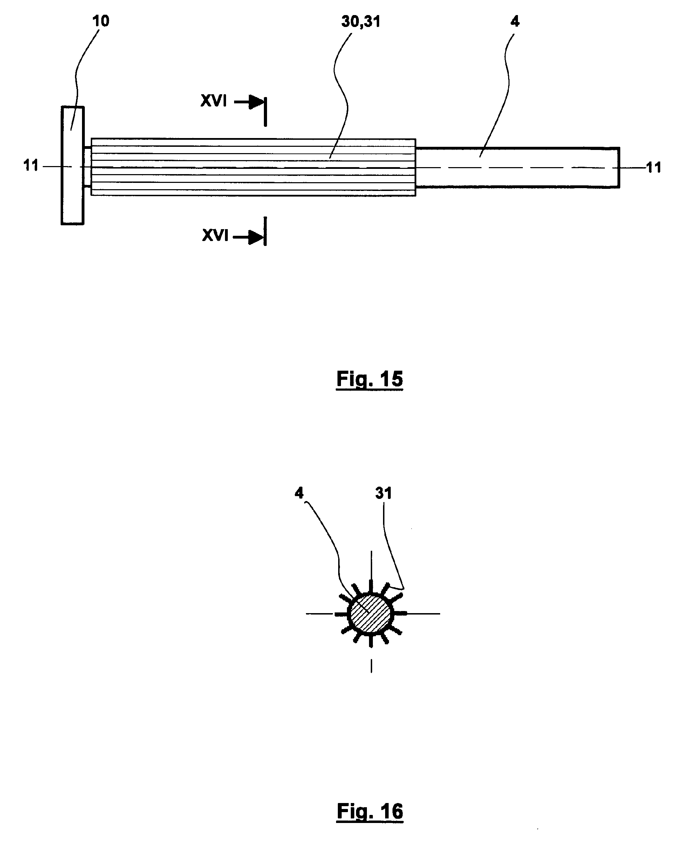

Für die in den **Fig. 13 und 14** sowie **Fig. 15 und 16** dargestellten Ausführungsbeispiele ist die Mantelfläche 13 des Aero-Spikes 4 mit Rillen 30 und/oder Rippen 31 versehen, die in der Umfangsrichtung, vorzugsweise gleichmäßig, verteilt sich und sich in Richtung der Längsachse 11-11 des Aero-Spikes 4 erstrecken. Über die Rillen 30 und Rippen 31 wird die Mantelfläche 13 des Aero-Spikes 4 vergrößert, die in Wechselwirkung mit der Strömung tritt, was zu einer verstärkten Abbremsung der Wandgrenzschicht führt und somit vergrößerte Ablöseblasen zur Folge hat.

### BEZUGSZEICHENLISTE

- 1: Flugkörper
- 2: Strömungsrichtung
- 3: Stirnfläche Flugkörper
- 4: Aero-Spike
- 5: Stirnfläche Aero-Spike
- 6: abgelöste Grenzschicht
- 7: Ablösewinkel
- 8: bugseitige Ablöseblase
- 9: Bereich angelegter Strömung
- 10: Aero-Disk
- 11: Längsachse
- 12: heckseitige Ablöseblase
- 13: Mantelfläche
- 14: Austrittsrichtung
- 15: Strömungskanal
- 16: Längsausnehmung
- 17: poröser Teilbereich
- 18: Staudruck
- 19: endseitiger Teilbereich
- 20: nasenseitiger Teilbereich
- 21: Druck
- 22: Druck
- 23: Druck
- 24: Bereich großer Druck
- 25: Förderrichtung
- 26: Bereich kleines Druckes
- 27: Rauhigkeit
- 28: Rauhigkeitselement
- 29: begünstigte Strömungsrichtung
- 30: Rille
- 31: Rippe

## Patentansprüche

1. Flugkörper für den Überschallbereich mit einem sich von einer vorderen Stirnfläche (3) erstreckenden Aero-Spike (4), **dadurch gekennzeichnet, dass** der Aero-Spike (4) mit einem porösen Material gebildet ist, dessen offene Poren Strömungskanäle (15) bilden.

2. Flugkörper nach Anspruch 1, **dadurch gekennzeichnet, dass** der Aero-Spike (4) mit einem Sintermaterial gebildet ist.

3. Flugkörper nach Anspruch 1 oder 2, **dadurch gekennzeichnet, dass** der Aero-Spike (4) mit Keramik gebildet ist.

4. Flugkörper nach einem der vorhergehenden Ansprüche, **dadurch gekennzeichnet, dass** der Aero-Spike (4) als Vollquerschnitt ausgebildet ist.

5. Flugkörper nach einem der Ansprüche 1 bis 3, **dadurch gekennzeichnet, dass** der Aero-Spike (4) mit einer stirnseitig offenen Längsausnehmung (16) ausgebildet ist, in die die mit den offenen Poren gebildeten Strömungskanäle (15) münden.

6. Flugkörper für den Überschallbereich mit einem sich von einer vorderen Stirnfläche (3) erstreckenden Aero-Spike (4), welcher eine Längsausnehmung (16) besitzt mit zu einer Mantelfläche (13) des Aero-Spikes (4) führenden Strömungskanälen (15), insbesondere nach einem der vorhergehenden Ansprüche, **dadurch gekennzeichnet, dass** die Längsausnehmung (16) in ihrem vorderen Endbereich geschlossen ist.

7. Flugkörper nach einem der vorhergehenden Ansprüche, **dadurch gekennzeichnet, dass** der Aero-Spike (4) radiale Ausnehmungen, Bohrungen, Schlitze und/oder Perforationen besitzt.

8. Flugkörper für den Überschallbereich mit einem sich von einer vorderen Stirnfläche (3) erstreckenden Aero-Spike (4), insbesondere nach einem der vorhergehenden Ansprüche,
**dadurch gekennzeichnet, dass** die Mantelfläche (13) des Aero-Spikes (4) mit einer Rauhigkeit (27) in Richtung der Längsachse (11-11) versehen ist.

9. Flugkörper nach Anspruch 8, **dadurch gekennzeichnet, dass** die Mantelfläche (13) des Aero-Spikes (4) mit die Rauhigkeit in Richtung der Längsachse erhöhenden Elementen (28) versehen ist.

10. Flugkörper nach Anspruch 9, **dadurch gekennzeichnet, dass** die Rauhigkeiten (27) oder die die Rauhigkeit erhöhenden Elemente (28) in Richtung der Längsachse (11) asymmetrisch sind und eine Strömung in Richtung des vorderen Endbereichs (5) des Aero-Spikes (4) begünstigen.

11. Flugkörper für den Überschallbereich mit einem sich von einer vorderen Stirnfläche (3) erstreckenden Aero-Spike (4), insbesondere nach einem der vorhergehenden Ansprüche, **dadurch gekennzeichnet, dass** die Mantelfläche (13) des Aero-Spikes (4) in Richtung der Längsachse (11-11) verlaufende Rippen (31), Vorsprünge, Nuten, Rillen (30), Ausnehmungen oder Vertiefungen aufweist.

12. Flugkörper nach einem der vorhergehenden Ansprüche, **dadurch gekennzeichnet, dass** die Länge des Aero-Spikes (4) größer ist als der Durchmesser der vorderen Stirnseite (3) des Flugkörpers (1).

13. Flugkörper nach einem der vorhergehenden Ansprüche, **dadurch gekennzeichnet, dass** der Aero-Spike (4) in seinem vorderen Endbereich eine Verdickung, insbesondere eine Aero-Disk (10), besitzt.
